# EUROPEAN PATENT SPECIFICATION

(11) **EP 3 556 833 B1**
(45) Date of publication and mention of the grant of the patent: **28.08.2024**
(21) Application number: 17880767.3
(22) Date of filing: 14.12.2017
(51) Int. Cl.: C11B 3/10, A23D 9/02, C11B 3/04

(54) **METHOD FOR PRODUCING FAT/OIL COMPOSITION**
VERFAHREN ZUR HERSTELLUNG FETT- ODER ÖLZUSAMMENSETZUNG
METHODE DE PRODUCTION D'UNE COMPOSITION D'HUILE/ DE GRAISSE

(30) Priority: 15.12.2016 JP 2016242873
(43) Date of publication of application: 23.10.2019
(73) Proprietor: The Nisshin OilliO Group, Ltd., Tokyo 104-8285 (JP)
(72) Inventor: HIRAI, Hiroshi, Port Klang, Selangor Darul Ehsan 42009 (MY)
(74) Representative: Müller-Boré & Partner Patentanwälte PartG mbB
(86) International application number: PCT/JP2017/044862
(87) International publication number: WO 2018/110637

(56) References cited:
- WO-A1-2011/055732
- WO-A1-2013/018412
- CN-A- 106 635 250
- JP-A- 2000 119 682
- JP-A- 2013 018 970
- JP-A- 2014 068 541
- JP-A- 2016 123 330
- JP-A- H05 125 387
- JP-A- S57 147 436

## Description

### Technical Field

The present invention relates to a method of producing a refined glyceride composition according to claim 1.

### Background Art

Various efforts have been made in recent years to improve the quality of fats and/or oils in terms of flavor, stability, and the like. Various factors are involved in deteriorating the quality of fats and/or oils. For example, it is known that an oxirane structure, a three-membered ring ether, is chemically unstable and thus rich in reactivity, and is prone to chemical reactions such as polymerization. Such chemical reactions may cause deterioration of the quality of fats and/or oils.

Some glyceride compositions contain trace amounts of fatty acid esters of 3-chloropropane-1,2-diol potentially derived from a fatty acid ester of glycidol, one type of epoxide having the oxirane structure described above. 3-Chloropropane-1,2-diol is also called 3-MCPD. Fatty acid esters of 3-chloropropane-1,2-diol can produce 3-chloropropane-1,2-diol by liberation of fatty acids. The presence of 3-chloropropane-1,2-diol and derivatives thereof at high concentration is said to have an adverse effect on health. However, it is unlikely that a trace amount of 3-chloropropane-1,2-diol present in fats and/or oils such as vegetable oil ingested over many years will immediately have an adverse effect on health. Additionally, although there are no standard values for ingesting 3-chloropropane-1,2-diol, and the like, it is required to reduce its presence in glyceride compositions as much as possible.

To deal with the above problems, for example, Patent Literature 1 discloses a method including e.g. deodorizing under specific temperature conditions a glyceride composition containing at least one selected from the group consisting of 3-chloropropane-1,2-diol, fatty acid esters of 3-chloropropane-1,2-diol, glycidol, and fatty acid esters of glycidol and/or containing a diglyceride in an amount of 3% by mass or more. This method makes it possible to reduce the content of fatty acid esters of glycidol, fatty acid esters of 3-chloropropane-1,2-diol, and the like in the glyceride composition. In addition, Patent Literature 2 discloses providing a refined glyceride composition containing 3-chloropropane-1,2-diol and fatty acid esters of 3-chloropropane-1,2-diol in small amounts as well as a method of producing the refined glyceride composition including bringing alkaline clay into contact with a glyceride composition which has not undergone a deodorizing step. However, the glyceride composition may have an increased amount of 3-chloropropane-1,2-diol or the like due to e.g. processing after the refining. Therefore, it is required to further remove 3-chloropropane-1,2-diol and fatty acid esters of 3-chloropropane-1,2-diol. Moreover, Patent Literatures 1 and 2 above require deodorization at 240°C or 260°C or less in order to suppress the generation of 3-chloropropane-1,2-diol and fatty acid esters of 3-chloropropane-1,2-diol. For this reason, it is impossible to carry out deodorization at a higher temperature for the purpose of improving the flavor or to carry out heating to a high temperature of 260°C or more in the subsequent steps.

Thus, studies have been made on methods of even more effectively reducing the content of 3-chloropropane-1,2-diol and fatty acid esters of 3-chloropropane-1,2-diol in a glyceride composition.

### Citation List

### Patent Literatures

Patent Literature 1: Japanese Patent Application Publication No. 2011-74358
Patent Literature 2: International Publication No. 2013/018412 JP2016 123330

A describes a method for producing a refined oil by contacting said oil with clay, wherein chloropropanols can be reduced when sodium carbonate and calcium hydroxide are added to the feedstock as an alkaline substance.

### Summary of Invention

The present invention has been made in view of the above circumstances, and an object thereof is to provide a method of producing a refined glyceride composition.

The present inventors have made earnest studies to solve the above problems and found as a result that bringing a glyceride composition which has not undergone a deodorizing step into contact with a mixture containing clay and potassium carbonate suppresses the generation of 3-chloropropane-1,2-diol and fatty acid esters of 3-chloropropane-1,2-diol in a refined glyceride composition, reducing their content. This finding has led to the completion of the present invention.

The present invention makes it possible to obtain a refined glyceride composition containing 3-chloropropane-1,2-diol and fatty acid esters of 3-chloropropane-1,2-diol in small amounts.

The glyceride composition treated with a mixture of clay and potassium carbonate by the present invention can suppress the generation of 3-chloropropane-1,2-diol and fatty acid esters of 3-chloropropane-1,2-diol even when subjected to a high temperature of, for example, 100°C or more in the subsequent deodorizing step.

### Description of Embodiments

Hereinafter, specific description is provided for embodiments of the present invention.

### [Method of Producing Purified Glyceride Composition]

A method of producing a refined glyceride composition of the present invention includes an optional degumming step for a glyceride composition which has not undergone a deodorizing step, a clay treatment step of bringing the glyceride composition subjected to the optional degumming into contact with a mixture containing clay and potassium carbonate, and an optional deodorizing step for the glyceride composition after the contact. Hereinafter, description is provided for each of the steps.

### [Clay Treatment Step]

The method of producing a refined glyceride composition of the present invention includes a clay treatment step of bringing a glyceride composition which has not undergone a deodorizing step into contact with a mixture containing clay and potassium carbonate. Note that the clay treatment step of the present invention may be a decolorizing step.

### (Glyceride Composition Which Has Not Undergone Deodorizing Step)

The glyceride composition which has not undergone a deodorizing step of the present invention means a glyceride composition having a composition before the completion of refining. Here, the glyceride composition mentioned in the present invention includes glycerides formed by ester bonding glycerin with 1 to 3 fatty acids, and includes triglycerides (triacylglycerols) which are a major component of fat and/or oil as well as diglycerides (diacylglycerols) and monoglycerides (monoacylglycerols). In addition, it may contain components other than glycerides derived from animal and plant fats and/or oils such as plant sterols, lecithin, antioxidant components, and pigment components. However, it is appropriate that a content of 95% by mass or more is preferably of glyceride, and the glyceride is more preferably 97% by mass or more, further preferably 99% by mass or more, and particularly preferably 100% by mass. Note that it is appropriate that the triglyceride in the glyceride is preferably 90% by mass or more and more preferably 93% by mass to 100% by mass.

As the specific glyceride composition, unrefined crude oils, degummed oils refined according to the usual method, deacidified oils, and decolorized oils are preferable, and deacidified oils or decolorized oils are more preferable. Examples usable include vegetable oils such as rapeseed oil, soybean oil, rice oil, safflower oil, grape oil, sunflower oil, wheat germ oil, corn oil, cotton seed oil, sesame oil, peanut oil, flux oil, perilla oil, olive oil, palm oil, and coconut oil, vegetable oils prepared by mixing two or more of these or edible fractionated oils such as palm olein, palm stearin, palm super olein, and palm mid fraction formed by fractionating them, crude oils thereof, hydrogenated oils, transesterified oils, and edible oils produced by a direct esterification reaction such as medium chain fatty acid triglyceride. Note that, since 3-MCPD and/or fatty acid esters of 3-MCPD tend to produce more frequently in fats and/or oils having relatively a large amount of partial glyceride, it is particularly preferable to use palm-derived fats and/or oils, rice oil, transesterified oils, and the like as a raw material because of a high effect of reducing 3-MCPD and/or fatty acid esters of 3-MCPD of the present invention. Examples of the palm-derived fats and/or oils include palm oil, palm kernel oil, palm olein, palm stearin, palm super olein, and palm mid fraction. It is possible to use usual methods as the refining methods before and after the clay treatment step of the present invention. Specifically, there are chemical refining and physical refining, but either refining method may be used. Note that, in the former chemical refining, a crude oil obtained by squeezing and extracting the raw material plant is refined into refined oil by undergoing degumming treatment, deacidifying treatment, decolorizing treatment, dewaxing treatment, and deodorizing treatment. On the other hand, the latter physical refining is a method often used for palm oil, coconut oil, and the like, in which a crude oil obtained by squeezing palm, coconut, or the like as a raw material is refined into refined oil by undergoing degumming treatment, decolorizing treatment, and deacidifying/deodorizing treatment.

The phrase "which has not undergone a deodorizing step" means before the treatment of the deodorizing step to be described later, and specifically means not being heated at a temperature of, for example, 100°C or more, preferably 150°C or more, more preferably 180°C or more, further preferably 200°C or more, and particularly preferably 240°C or more. When the deodorizing step, particularly the deodorizing step of heating at such a temperature is undergone, 3-chloropropane-1,2-diol and the fatty acid esters of 3-chloropropane-1,2-diol are increased. Thus, the present invention carries out the clay treatment to be described later prior to heating to these temperatures to remove the causative substances (chlorine compounds and the like) which generate 3-chloropropane-1,2-diol and the fatty acid esters of 3-chloropropane-1,2-diol. If the deodorizing step is not undergone, one may use a refined oil having undergone other refining steps such as the degumming step, the deacidifying step, and the water washing step. The glyceride composition which has not undergone a deodorizing step is preferable in that 3-MCPD and fatty acid esters of 3-MCPD are not generated.

### (Clay)

Examples of the clay used in the present invention include active clay, neutral clay, acid clay, and alkaline clay. As the clay, active clay and alkaline clay are more preferable, and alkaline clay is particularly preferable.

Examples of the active clay include clay and acid clay activated with an acid. Regarding the pH of active clay and acid clay, clay exhibiting, for example, a pH of 1.0 or more, preferably a pH of 2.0 or more, and more preferably a pH of 3.0 or more and, for example, a pH of 6.0 or less, preferably a pH of 5.0 or less, and more preferably a pH of 4.0 or less is preferable because of high decomposition capacity and adsorption capacity to chlorine compounds which can be causative substances of 3-MCPD. The upper limits and the lower limits of pH may have a range appropriately combined, and it is appropriate that, for example, the range is preferably pH = 1.0 to 6.0, more preferably pH = 2.0 to 5.0, and particularly preferably pH = 3.0 to 4.0.

In particular, the alkaline clay is not particularly limited as long as, when the clay is added to water, the clay is such that the pH of the aqueous solution containing the alkaline clay is alkaline (that is, clay which is alkaline). However, clay exhibiting, for example, a pH of 7.5 or more, preferably a pH of 8.0 or more, and more preferably a pH of 8.5 or more and, for example, a pH of 12 or less, preferably a pH of 11 or less, and more preferably a pH of 10 or less is preferable because of high decomposition capacity and adsorption capacity to chlorine compounds which can be causative substances of 3-MCPD. The upper limits and the lower limits of pH may have a range appropriately combined, and it is appropriate that, for example, the range is preferably pH = 7.5 to 12, more preferably pH = 8.0 to 10, and particularly preferably pH = 8.5 to 9.

The alkaline clay used in the present invention is not particularly limited. However, for example, it is possible to use one having the following composition (unit: % by mass relative to the total amount of the alkaline clay).

| | |
|---|---|
| SiO₂ | (50 to 60% by mass) |
| Al₂O₃ | (10 to 20% by mass) |
| Fe₂O₃ | (3 to 10% by mass) |
| MgO | (2 to 9% by mass) |
| CaO | (1 to 5% by mass) |

The amount of clay used in the clay treatment step is, for example, 0.5% by mass or more, preferably 0.6% by mass or more, more preferably 0.7% by mass or more, further preferably 0.8% by mass or more, particularly preferably 1% by mass or more, and even more particularly 1.5% by mass or more and, for example, 10% by mass or less, preferably 9% by mass or less, more preferably 7% by mass or more, further preferably 5% by mass or less, particularly preferably 3% by mass or less, and even more particularly 2% by mass or less relative to the amount of the glyceride composition which has not undergone a deodorizing step as a raw material for the purpose of effectively adsorbing or decomposing the chlorine compound in the glyceride composition, suppressing the generation of 3-MCPD and/or fatty acid esters of 3-MCPD in the refined glyceride composition, and obtaining a sufficient reduction effect on their content. The upper limits and the lower limits of the amount of clay may have a range appropriately combined, and it is appropriate that, for example, the range is preferably 0.5 to 10% by mass, more preferably 0.7 to 7% by mass, and particularly preferably 1 to 3% by mass.

### (Potassium Carbonate)

The present invention carries out the clay treatment step using potassium carbonate together with the clay. The content of potassium carbonate is 0.01% by mass or more, preferably 0.05% by mass or more, more preferably 0.1% by mass or more, further preferably 0.2% by mass or more, and particularly preferably 0.3% by mass or more and 10% by mass or less, preferably 5% by mass or less, more preferably 2% by mass or less, further preferably 1% by mass or less, particularly preferably 0.5% by mass or less relative to the total mass of the glyceride composition which has not undergone a deodorizing step. The upper limits and the lower limits of the amount of potassium carbonate may have a range appropriately combined, and it is appropriate that, for example, the range is 0.01 to 10% by mass, preferably 0.05 to 5% by mass, more preferably 0.1 to 1% by mass, further preferably 0.1 to 0.5% by mass, and particularly preferably 0.3 to 0.5% by mass.

### (Mixture Containing Clay and Potassium Carbonate)

The mixture containing clay and potassium carbonate used in the present invention may be any mixture as long as it contains the clay and potassium carbonate described above and does not impair their activities. The mixture of the present invention can contain the clay and potassium carbonate as well as activated carbon, silica, and the like.

The mass ratio between the clay and potassium carbonate in the mixture is, for example, clay : potassium carbonate = 50 : 1 to 1 : 10, preferably 40 : 1 to 1 : 5, more preferably 30 : 1 to 1 : 1, further preferably 25 : 1 to 2 : 1, and particularly preferably 20: 1 to 4 : 1.

### (Conditions of Clay Treatment Step)

Various conditions in the clay treatment step are not particularly limited, and it is possible to use the conditions of the decolorizing step used in the usual fat and/or oil production method. For example, the glyceride composition which has not undergone a deodorizing step as a raw material may be added with a mixture containing clay and potassium carbonate, followed by heating at a temperature of, for example, 70 to 200°C, preferably 80 to 150°C, and more preferably 90 to 120°C for, for example, 5 to 120 minutes, preferably 10 to 90 minutes, and more preferably 15 to 60 minutes. After the completion of the clay treatment step, the mixture containing clay and potassium carbonate can be removed by filtration, centrifugation, or the like to obtain a clay-treated glyceride composition (decolorized oil). It is preferable to remove the water contained in the clay to carry out decolorization under reduced pressure in order to enhance the adsorption capacity. The pressure (degree of pressure reduction) is preferably, for example, under a reduced pressure of 20000 Pa or less, preferably 300 to 13000 Pa, and more preferably 2000 to 10000 Pa.

The method of bringing the glyceride composition as a raw material into contact with the mixture containing clay and potassium carbonate is not particularly limited, and it is also possible to, for example, carry out the decolorizing step with clay or activated carbon, followed by treatment using clay. For example, the method may be carried out by placing the above raw material to be brought into contact in a decolorizing treatment bath or the like followed by optional stirring of the raw material. Examples of the decolorizing treatment bath include tanks, columns, and filters. The tank is preferably a tank with a stirrer, and it is preferable to, after bringing the glyceride composition as a raw material into contact with the mixture containing clay and potassium carbonate, separate the mixture by filtration, centrifugation, or the like. In order to facilitate filtration, the clay treatment step may be carried out in the presence of an aid such as a filter aid. Examples of the filter aid include inorganic filter aids such as Celite, fibers such as cellulose, and organic filter aids such as pulverized products thereof. Moreover, the column or the filter may be filled with clay for retention, and the glyceride composition as a raw material may be passed through the column or the filter. Passing of the glyceride composition as a raw material is preferable because the mixture can also be separated at the same time as the passing and the apparatus is more compact than the tank. As the filter, it is preferable to use, for example, a single plate filter, a filter press, an amafilter, or the like. The tank, the column, or the filter usable may be made of glass, plastic, or metal such as iron or stainless steel and is preferably made of metal from the viewpoint of durability. The present clay treatment step can also decolorize the glyceride composition as a raw material.

### [Degumming Step]

Prior to the clay treatment step, the method may include an optional degumming step of degumming the glyceride composition which has not undergone a deodorizing step.

The degumming step can employ steps usually used in the degumming of fats and/or oils, and may be carried out by, for example, bringing the above glyceride composition into contact with an acid in water followed by separation and removal of the obtained aqueous phase. Examples of the acid include phosphoric acid, citric acid, oxalic acid, and succinic acid, and phosphoric acid and citric acid are preferable. The acid may be used singly or in combination of two or more kinds. It is appropriate that the content of acid is, for example, 0.001% by mass or more, preferably 0.005% by mass or more, more preferably 0.01% by mass or more, and further preferably 0.02% by mass or more and, for example, 1% by mass or less, preferably, 0.5% by mass or less, more preferably 0.1% by mass or less, and further preferably 0.07% by mass or less if the mass of the glyceride composition to be brought into contact is set to 100% by mass. These upper limit values and lower limit values may be combined as appropriate to form a desired range. The content of acid is particularly preferably 0.04% by mass or 0.05% by mass.

The acid is preferably added as an aqueous solution for the purpose of sufficient contact with fat and/or oil. It is appropriate that, in the case of adding water to the acid, the amount of water added is, for example, 0.002 to 1% by mass if the mass of the glyceride composition to be brought into contact is set to 100% by mass.

The gum ingredient precipitated in the degumming step can be removed together with the clay in the next step, the clay treatment step described above, or separated and removed in the degumming step. In the case of separation and removal in the degumming step, separation and removal of the aqueous phase result in removal of the gum components and impurities dissolved in the aqueous phase, making it possible to obtain the glyceride composition present in the oil phase. Examples of the separation method can include filtration and centrifugation. The conditions for filtration and centrifugation used may be the conditions for filtration and centrifugation in the clay treatment step described above. Here, the gum ingredient refers to phospholipids and the like contained in palm crude oil.

### [Deodorizing Step]

The steps after the clay treatment step described above may include an optional deodorizing step which further deodorizes the glyceride composition after contact obtained by being brought into contact with the mixture containing clay and potassium carbonate.

If the deodorizing step is included, the clay treatment step described above can correspond to the decolorizing step of the glyceride composition. The deodorization is carried out by heating the glyceride composition after contact and optionally applying water vapor. The deodorization may be carried out under the temperature condition of 100 to 260°C used in the usual fat and/or oil production method, and may be carried out under the condition of 245 to 270°C or 250 to 270°C where 3-MCPD and/or fatty acid esters of 3-MCPD are increased. In addition, deodorization may be carried out under a lower temperature condition of 100 to 250°C. In the deodorizing step, the temperature condition is preferably 150 to 250°C, more preferably 180 to 250°C, and further preferably 180 to 230°C. It can be expected that the deodorization of the glyceride composition under a temperature condition preferably lower than the temperature condition used in the usual fat and/or oil production method increases the effect of suppressing the generation of 3-MCPD and/or fatty acid esters of 3-MCPD and the reduction effect on their content.

The deodorization time is preferably 15 to 150 minutes and more preferably 20 to 100 minutes.

The heating may be carried out optionally under reduced pressure. It is appropriate that the reduced pressure condition is, for example, 10 to 1300 Pa, preferably 400 to 1300 Pa, and more preferably 670 to 1300 Pa.

The heating is preferably carried out while blowing water vapor into the refined glyceride. The amount of water vapor blown is preferably 0.5 to 10% by mass and more preferably from 1 to 5% by mass.

### (Re-Refining Step)

The method of producing a refined glyceride composition of the present invention may re-refine the refined glyceride composition having undergone the clay treatment step or the optional deodorizing step. The re-refining step can carry out the refining step described above and can include, for example, a re-gumming step, a re-decolorizing step, or a re-deodorizing step. In particular, it is preferable to carry out the re-decolorizing step. The clay used in the re-decolorizing step is not particularly limited, and it is possible to use various clays used in the clay treatment step.

If the glyceride composition is brought into contact with the mixture containing clay and potassium carbonate in the first decolorizing step (the above clay treatment step) before the re-decolorizing step, the residual amount of the chlorine compounds considered to be the causative substances of 3-MCPD in the refined glyceride composition is sufficiently reduced. Therefore, regardless of the type of clay used in the re-decolorizing step, it is possible to significantly reduce the amount of 3-MCPD which may be generated in the re-deodorizing step after the re-decolorizing step.

The conditions in the re-decolorizing step are not particularly limited, and may be the conditions used in the usual fat and/or oil production method as in the case of the first clay treatment step before the re-decolorizing step. For example, clay may be added to the refined glyceride composition, followed by heating at 80 to 150°C for 5 to 60 minutes under reduced pressure. After the re-decolorization is finished, the clay can be removed by filtration or the like to obtain a re-decolorized glyceride composition.

The re-decolorized glyceride composition obtained after the re-decolorizing step may be further re-deodorized. The conditions in the re-deodorizing step are not particularly limited, and may be the conditions used in the usual fat and/or oil production method as in the case of the first deodorizing step.

### [Refined Glyceride Composition]

In the refined glyceride composition the content of 3-chloropropane-1,2-diol and fatty acid esters of 3-chloropropane-1,2-diol (3-MCPD) is 1 ppm or less relative to the total mass of the refined glyceride composition.

It is appropriate that the content of fatty acid esters of 3-MCPD is preferably 0.9 ppm or less, more preferably 0.8 ppm or less, further preferably 0.7 ppm or less, particularly preferably 0.6 ppm or less, and even more particularly 0.5 ppm or less. The lower the content of fatty acid esters of 3-MCPD, the better it is. For this reason, the lower limit value thereof need not necessarily be provided, but is, for example, preferably 0.2 ppm or more, more preferably 0.1 ppm or more, further preferably 0.05 ppm or more, particularly preferably 0.01 ppm or more, and even more particularly 0.005 ppm or more. The refined glyceride composition can be obtained by the above-described method of producing a refined glyceride composition of the present invention. The refined glyceride composition is a composition obtained by suitably reducing the content of 3-MCPD and fatty acid esters of 3-MCPD in the refined glyceride composition.

### [Determination of Content of 3-MCPD and/or 3-MCPD in Refined Glyceride Composition]

In the present invention, the clay treatment step makes it possible to suppress the generation of 3-MCPD and/or fatty acid esters of 3-MCPD in the refined glyceride composition, reducing their content. The content of 3-MCPD and/or fatty acid esters of 3-MCPD in the refined glyceride composition can be carried out in accordance with the American Oil Chemists' Society Official Method (AOCS Official Method Cd29c-13). Specifically, the total amount, obtained by converting the amount of 3-MCPD and fatty acid esters of 3-MCPD contained in the refined glyceride composition as the amount of 3-MCPD (hereinafter referred to as "True MCPD"), was obtained, which was set as the content of 3-MCPD. Note that, although the refined glyceride composition contains glycidol and fatty acid esters of glycidol as compounds similar to 3-MCPD and fatty acid esters of 3-MCPD, the content of 3-MCPD measured by the above method does not include these glycidol and fatty acid esters thereof.

### [Examples]

Hereinafter, the present invention is described in further detail based on Examples of the present invention, but the present invention is not limited at all to these descriptions.

Studies were made in the following conditions on the effect of suppressing the generation of 3-MCPD and fatty acid esters of 3-MCPD in the refined glyceride composition and the possibility of reducing their content.

### (Test 1)

### [Example 1]

The glyceride composition as a raw material used was palm crude oil (manufactured by Intercontinental Specialty Fats Sdn. Bhd.). The palm crude oil in an amount of 100 g was heated at 90°C for 5 minutes, followed by addition of 30 µl (0.04% by mass relative to the entire palm crude oil) of phosphoric acid for stirring for 10 minutes. After the stirring, the resultant degummed glyceride composition (degummed palm crude oil) was added further with 200 mg (2% by mass relative to the entire degummed palm crude oil) of alkaline clay (manufactured by Natural Bleach SDN. BHD, NB 14000, pH = 8.6) and 10 mg (0.1% by mass relative to the entire degummed palm crude oil) of potassium carbonate, followed by stirring at 90°C for 20 minutes to bring the degummed glyceride composition (degummed palm crude oil) into contact with the mixture of clay and potassium carbonate. Thereafter, the resultant composition after contact was filtered through filter paper to obtain a refined glyceride composition (refined palm oil).

### [Comparative Example 1]

The glyceride composition (palm oil) of Comparative Example 1 was obtained by repeating experiments in the same manner as that in Example 1 except that the degummed glyceride composition was not brought into contact with the mixture of clay and potassium carbonate.

### [Comparative Examples 2 to 6]

The glyceride compositions (palm oil) of Comparative Examples 2 to 6 were obtained by repeating experiments in the same manner as that in Example except that the various alkalis shown in Table 1 were used instead of potassium carbonate.

### (Measurement of pH of Clay)

To 100 g of distilled water, 5 g of the clay used in Examples and Comparative Examples was added, followed by shaking and mixing for incubation at 25°C for 16 hours. Thereafter, the aqueous phase was taken, and a portable pH meter (model name: FEP-20, manufactured by Mettler Toledo) was used to measure the pH of the clay. The results were such that the pH of the alkaline clay (manufactured by Natural Bleach SDN. BHD, NB 14000) was 8.6 and the pH of the active clay (product name: SUPER PLUS, manufactured by TAIKO CLAY MARKETING SDN. BHD.) was 3.9.

### (3-MCPD Generation Test)

A 3-MCPD generation test was carried out in order to test how much 3-MCPD would be generated by the glyceride compositions of Examples and Comparative Examples in the case of heating at a temperature used in the deodorizing step. Specifically, each of the glyceride compositions obtained in Examples and Comparative Examples was weighed in an amount of 2 g and heated at 250°C for 1 hour to measure the content of 3-MCPD before and after the heating.

The content of 3-MCPD and/or fatty acid esters of 3-MCPD in the refined glyceride composition was carried out in accordance with the American Oil Chemists' Society Official Method (AOCS Official Method Cd29c-13).

Specifically, the total amount, obtained by converting the amount of 3-MCPD and fatty acid esters of 3-MCPD contained in the glyceride compositions of Examples and Comparative Examples as the amount of 3-MCPD, was obtained, which was set as the content of 3-MCPD. Note that the analysis conditions of the gas chromatograph mass spectrometer used in AOCS Official Method Cd29c-13 are as follows.

### (Analysis Conditions of Gas Chromatograph Mass Spectrometer)

Analyzer: model name: QP-2010 manufactured by Shimadzu Corporation
Column: product name: HP-5MS manufactured by Agilent Technology (length 30 m, diameter 0.25 mm)
Column temperature: 60°C (1 min) to 120°C (rate of temperature rise of 10°C/min) to 190°C (rate of temperature rise of 6°C/min) to 280°C (rate of temperature rise of 20°C/min)
Detector: MS (El, SIM mode)
Splitless: injection of 1 µL
Carrier gas: He

Table 1 shows the test results of Example 1 and Comparative Examples 1 to 6 described above. The "3-MCPD Conversion Amount" in the table below indicates the total amount of 3-MCPD and fatty acid esters of 3-MCPD in the refined glyceride composition converted to the amount of 3-MCPD liberated.

**Table 1**

| Example | Clay | Alkali | 3-MCPD Conversion Amount Before Heating at 250°C | 3-MCPD Conversion Amount After Heating at 250°C |
|---|---|---|---|---|
| Example 1 | NB 14000 | K₂CO₃ | 0.85 ppm | 0.93 ppm |
| Comparative Example 1 | | | 0.92 ppm | 7.82 ppm |
| Comparative Example 2 | NB 14000 | Na₂CO₃ | 0.87 ppm | 5.33 ppm |
| Comparative Example 3 | NB 14000 | Na₂SO₃ | 0.90 ppm | 5.85 ppm |
| Comparative Example 4 | NB 14000 | Na₂SO₄ | 0.88 ppm | 6.04 ppm |
| Comparative Example 5 | NB 14000 | NaOH | 0.87 ppm | 3.80 ppm |
| Comparative Example 6 | NB 14000 | Sodium Stearate | 0.87 ppm | 5.23 ppm |

As shown in Table 1, it was revealed that the case of using the mixture of clay and potassium carbonate (Example 1) was able to greatly reduce the generation of 3-MCPD compared to the case of using alkalis such as sodium carbonate.

### (Test 2)

### [Examples 2 to 13]

A degummed glyceride composition (degummed palm crude oil) was obtained in the same manner as that in Example 1 except that a 10% aqueous solution of phosphoric acid in an amount of 0.5 ml (0.05% by mass relative to the entire palm crude oil) or a 10% aqueous solution of citric acid in an amount of 0.5 ml (0.05% by mass relative to the entire palm crude oil) was used instead of phosphoric acid in an amount of 30 µl. The resultant degummed glyceride composition (degummed palm crude oil) was weighed in an amount of 10 g and was added further with 200 mg (2% by mass relative to the entire degummed palm crude oil) of alkaline clay (manufactured by Natural Bleach SDN. BHD, NB 14000) or 200 mg (2% by mass relative to the entire degummed palm crude oil) of active clay (SUPER PLUS, manufactured by TAIKO CLAY MARKETING SDN. BHD., pH = 3.9) as well as with potassium carbonate in an amount of 10 mg (0.1% by mass relative to the entire degummed palm crude oil), 30 mg (0.3% by mass relative to the entire degummed palm crude oil), or 50 mg (0.5% by mass relative to the entire degummed palm crude oil), followed by stirring at 90°C for 20 minutes to bring the degummed glyceride composition (degummed palm crude oil) into contact with the mixture of clay and potassium carbonate. Thereafter, the resultant composition after contact was filtered through filter paper to obtain a refined glyceride composition (refined palm oil). Table 2 shows the details such as the clays used and the content of potassium carbonate.

### [Comparative Examples 7 to 10]

A refined glyceride composition (refined palm oil) was obtained in the same manner as that in Examples 2 to 13 described above except that alkalis were not used. Note that Comparative Example 7 corresponds to Examples 2 to 4, Comparative Example 8 corresponds to Examples 5 to 7, Comparative Example 9 corresponds to Examples 8 to 10, and Comparative Example 10 corresponds to Example 11 to 13.

Table 2 shows the test results of testing Examples 2 to 13 and Comparative Examples 7 to 10 based on the above 3-MCPD generation test and the above analysis conditions of the gas chromatograph mass spectrometer. The "3-MCPD Conversion Amount" in the table below indicates the total amount of 3-MCPD and fatty acid esters of 3-MCPD in the refined glyceride composition converted to the amount of 3-MCPD liberated.

**Table 2**

| Example | Weak Acid for Degumming | Clay | Content of Potassium Carbonate | 3-MCPD Conversion Amount Before Heating at 250°C | 3-MCPD Conversion Amount After Heating at 250°C |
|---|---|---|---|---|---|
| Comparative Example 7 | Phosphoric Acid | NB 1400 | 0% by Mass | 0.03 ppm | 1.15 ppm |
| Example 2 | | | 0.1% by Mass | 0.02 ppm | 1.09 ppm |
| Example 3 | | | 0.3% by Mass | 0.03 ppm | 0.42 ppm |
| Example 4 | | | 0.5% by Mass | 0.04 ppm | 0.44 ppm |
| Comparative Example 8 | Phosphoric Acid | SUPER PLUS | 0% by Mass | 0.04 ppm | 2.24 ppm |
| Example 5 | | | 0.1% by Mass | 0.02 ppm | 1.10 ppm |
| Example 6 | | | 0.3% by Mass | 0.02 ppm | 0.60 ppm |
| Example 7 | | | 0.5% by Mass | 0.02 ppm | 0.35 ppm |
| Comparative Example 9 | Citric Acid | NB 1400 | 0% by Mass | 0.02 ppm | 1.20 ppm |
| Example 8 | | | 0.1% by Mass | 0.07 ppm | 0.44 ppm |
| Example 9 | | | 0.3% by Mass | 0.02 ppm | 0.32 ppm |
| Example 10 | | | 0.5% by Mass | 0.02 ppm | 0.33 ppm |
| Comparative Example 10 | Citric Acid | SUPER PLUS | 0% by Mass | 0.04 ppm | 1.49 ppm |
| Example 11 | | | 0.1% by Mass | 0.02 ppm | 1.36 ppm |
| Example 12 | | | 0.3% by Mass | 0.02 ppm | 0.43 ppm |
| Example 13 | | | 0.5% by Mass | 0.07 ppm | 0.36 ppm |

As shown in Table 2, it was revealed that use of a specific amount of potassium carbonate made it possible to greatly reduce the generation of 3-MCPD. In particular, it was revealed that use of potassium carbonate in a range of 0.3 to 0.5% by mass made it possible to suitably reduce the generation of 3-MCPD.

## Claims

1. A method of producing a refined glyceride composition or treating a glyceride composition, comprising:
a clay treatment step of bringing a glyceride composition which has not undergone a deodorizing step into contact with a mixture containing clay and potassium carbonate, wherein a content of the potassium carbonate is 0.01% by mass or more relative to a total mass of the glyceride composition which has not undergone a deodorizing step.

2. The method of producing a refined glyceride composition according to claim 1, wherein
the clay is alkaline clay.

3. The method of producing a refined glyceride composition according to claim 1 or 2, wherein
a content of the potassium carbonate is 0.01 to 10% by mass relative to a total mass of the glyceride composition which has not undergone a deodorizing step.

4. The method of producing a refined glyceride composition according to any one of claims 1 to 3, wherein
the glyceride composition is a palm-derived fat and/or oil.

5. The method of producing a refined glyceride composition according to any one of claims 1 to 4, further comprising
a degumming step for the glyceride composition prior to the clay treatment step.

6. The method of producing a refined glyceride composition according to claim 5, wherein
the degumming step includes bringing the glyceride composition into contact with an aqueous solution of phosphoric acid or citric acid or with phosphoric acid to remove a gum ingredient in the clay treatment step.

7. The method of producing a refined glyceride composition according to any one of claims 1 to 6, further comprising
a deodorizing step after the clay treatment step, wherein
the clay treatment step is a decolorizing step.

8. The method of producing a refined glyceride composition according to any one of claims 1 to 7, wherein
the deodorizing step is carried out under a temperature condition of 100 to 260°C.

9. The method of treating a glyceride composition according to claim 1, wherein
the glyceride composition is a palm-derived fat and/or oil,
the clay is alkaline clay, and
a content of the potassium carbonate is 0.3 to 1.0% by mass relative to a total mass of the glyceride composition which has not undergone a deodorizing step.

10. The method of treating a glyceride composition according to claim 1 or 9, further comprising
a degumming step for the glyceride composition prior to the clay treatment step, wherein
the degumming step includes bringing the glyceride composition into contact with an aqueous solution of phosphoric acid or citric acid or with phosphoric acid to remove a gum ingredient in the clay treatment step.

11. The method of treating a glyceride composition according to any one of claims 1, 9 and 10, wherein
the deodorizing step is carried out under a temperature condition of 100 to 260°C.

## Patentansprüche

1. Verfahren zum Herstellen einer raffinierten Glyceridzusammensetzung oder zum Behandeln einer Glyceridzusammensetzung, umfassend:
einen Tonbehandlungsschritt des Inkontaktbringens einer Glyceridzusammensetzung, die nicht einem Deodorierungsschritt unterzogen wurde, mit einem Gemisch, enthaltend Ton und Kaliumcarbonat, wobei ein Gehalt des Kaliumcarbonats 0,01 Masse-% oder mehr, bezogen auf eine Gesamtmasse der Glyceridzusammensetzung, die nicht einem Deodorierungsschritt unterzogen wurde, beträgt.

2. Verfahren zum Herstellen einer raffinierten Glyceridzusammensetzung nach Anspruch 1, wobei
der Ton alkalischer Ton ist.

3. Verfahren zum Herstellen einer raffinierten Glyceridzusammensetzung nach Anspruch 1 oder 2, wobei
ein Gehalt des Kaliumcarbonats 0,01 bis 10 Masse-%, bezogen auf eine Gesamtmasse der Glyceridzusammensetzung, die nicht einem Deodorierungsschritt unterzogen wurde, beträgt.

4. Verfahren zum Herstellen einer raffinierten Glyceridzusammensetzung nach einem der Ansprüche 1 bis 3, wobei
die Glyceridzusammensetzung ein aus Palmen gewonnenes Fett und/oder Öl ist.

5. Verfahren zum Herstellen einer raffinierten Glyceridzusammensetzung nach einem der Ansprüche 1 bis 4, weiter umfassend
einen Entgummierungsschritt für die Glyceridzusammensetzung vor dem Tonbehandlungsschritt.

6. Verfahren zum Herstellen einer raffinierten Glyceridzusammensetzung nach Anspruch 5, wobei
der Entgummierungsschritt das Inkontaktbringen der Glyceridzusammensetzung mit einer wässrigen Lösung von Phosphorsäure oder Zitronensäure oder mit Phosphorsäure zur Entfernung eines Gummibestandteils in dem Tonbehandlungsschritt einschließt.

7. Verfahren zum Herstellen einer raffinierten Glyceridzusammensetzung nach einem der Ansprüche 1 bis 6, weiter umfassend
einen Deodorierungsschritt nach dem Tonbehandlungsschritt, wobei der Tonbehandlungsschritt ein Entfärbungsschritt ist.

8. Verfahren zum Herstellen einer raffinierten Glyceridzusammensetzung nach einem der Ansprüche 1 bis 7, wobei
der Deodorierungsschritt unter einer Temperaturbedingung von 100 bis 260°C durchgeführt wird.

9. Verfahren zum Behandeln einer Glyceridzusammensetzung nach Anspruch 1, wobei
die Glyceridzusammensetzung ein aus Palmen gewonnenes Fett und/oder Öl ist, der Ton alkalischer Ton ist, und
ein Gehalt des Kaliumcarbonats 0,3 bis 1,0 Masse-%, bezogen auf eine Gesamtmasse der Glyceridzusammensetzung, die nicht einem Deodorierungsschritt unterzogen wurde, beträgt.

10. Verfahren zum Behandeln einer Glyceridzusammensetzung nach Anspruch 1 oder 9, weiter umfassend
einen Entgummierungsschritt für die Glyceridzusammensetzung vor dem Tonbehandlungsschritt, wobei
der Entgummierungsschritt das Inkontaktbringen der Glyceridzusammensetzung mit einer wässrigen Lösung von Phosphorsäure oder Zitronensäure oder mit Phosphorsäure zur Entfernung eines Gummibestandteils in dem Tonbehandlungsschritt einschließt.

11. Verfahren zum Behandeln einer Glyceridzusammensetzung nach Anspruch 1, 9 oder 10, wobei
der Deodorierungsschritt unter einer Temperaturbedingung von 100 bis 260°C durchgeführt wird.

## Revendications

1. Procédé de production d'une composition de glycérides raffinée ou de traitement d'une composition de glycérides, comprenant : une étape de traitement avec une argile, consistant à mettre une composition de glycérides n'ayant pas subi d'étape de désodorisation en contact avec un mélange qui contient une argile et du carbonate de potassium et dont la teneur en carbonate de potassium vaut 0,01 % ou plus, en masse rapportée à la masse totale de la composition de glycérides n'ayant pas subi d'étape de désodorisation.

2. Procédé de production d'une composition de glycérides raffinée, conforme à la revendication 1, dans lequel l'argile est une argile alcaline.

3. Procédé de production d'une composition de glycérides raffinée, conforme à la revendication 1 ou 2, dans lequel la teneur en carbonate de potassium vaut de 0,01 à 10 %, en masse rapportée à la masse totale de la composition de glycérides n'ayant pas subi d'étape de désodorisation.

4. Procédé de production d'une composition de glycérides raffinée, conforme à l'une des revendications 1 à 3, dans lequel la composition de glycérides est une graisse et/ou huile dérivée de palmier.

5. Procédé de production d'une composition de glycérides raffinée, conforme à l'une des revendications 1 à 4, qui comprend en outre,
une étape de dégommage de la composition de glycérides, avant l'étape de traitement avec une argile.

6. Procédé de production d'une composition de glycérides raffinée, conforme à la revendication 5, dans lequel l'étape de dégommage comprend le fait de mettre la composition de glycérides en contact avec une solution aqueuse d'acide phosphorique ou d'acide citrique, ou avec de l'acide phosphorique afin d'éliminer un ingrédient gommeux dans l'étape de traitement avec une argile.

7. Procédé de production d'une composition de glycérides raffinée, conforme à l'une des revendications 1 à 6, qui comprend en outre
une étape de désodorisation après le traitement avec une argile, et dans lequel
l'étape de traitement avec une argile est une étape de décoloration.

8. Procédé de production d'une composition de glycérides raffinée, conforme à l'une des revendications 1 à 7, dans lequel l'étape de désodorisation est opérée à une température de 100 à 260 °C.

9. Procédé de traitement d'une composition de glycérides, conforme à la revendication 1, dans lequel
la composition de glycérides est une graisse et/ou huile dérivée de palmier,
l'argile est une argile alcaline,
et la teneur en carbonate de potassium vaut de 0,3 à 1,0 %, en masse rapportée à la masse totale de la composition de glycérides n'ayant pas subi d'étape de désodorisation.

10. Procédé de traitement d'une composition de glycérides, conforme à la revendication 1 ou 9, qui comprend en outre une étape de dégommage de la composition de glycérides avant l'étape de traitement avec une argile, et dans lequel
l'étape de dégommage comprend le fait de mettre la composition de glycérides en contact avec une solution aqueuse d'acide phosphorique ou d'acide citrique, ou avec de l'acide phosphorique afin d'éliminer un ingrédient gommeux dans l'étape de traitement avec une argile.

11. Procédé de traitement d'une composition de glycérides, conforme à l'une des revendications 1, 9 et 10, dans lequel l'étape de désodorisation est opérée à une température de 100 à 260 °C.
